# EUROPEAN PATENT SPECIFICATION

(11) **EP 3 095 584 B1**
(45) Date of publication and mention of the grant of the patent: **19.02.2020**
(21) Application number: 15168812.4
(22) Date of filing: 22.05.2015
(51) Int. Cl.: B29C 51/10, B29C 51/12, B29C 51/26

(54) **A PROCESS OF MANUFACTURING TWIN-SHEET FOAM AIR DUCT WITH SOUND ABSORBING INTERLAYER**
EIN VERFAHREN ZUR HERSTELLUNG EINES LUFTKANALS MIT TWIN-SHEET-SCHAUMSTOFF MIT SCHALLABSORBIERENDER ZWISCHENSCHICHT
PROCÉDÉ POUR MANUFACTURER UN CONDUIT D'AIR EN MOUSSE À FEUILLE JUMELLE AVEC COUCHE INTERMÉDIAIRE ABSORBANT LES SONS

(43) Date of publication of application: 23.11.2016
(73) Proprietor: Sekisui Alveo AG, 6003 Luzern (CH)
(72) Inventor: Sigrist, André, 6280 Hochdorf (CH)
(74) Representative: Strehl Schübel-Hopf & Partner

(56) References cited:
- EP-A1- 2 631 064
- WO-A1-2014/182599
- DE-U1- 29 711 763
- DE-U1-202007 012 988
- US-A1- 2006 103 172
- US-A1- 2010 062 198

## Description

The present invention concerns a process for producing a sound absorbing hollow body such as an air duct in a conventional twin-sheet thermoforming process. To improve the sound absorption characteristics of a hollow body a layer of a sound absorbing material is placed between the two sheets forming the outer shell of the hollow body while being in contact with at least one of the two outer sheets. Surprisingly, even though the inner layer is allowed to be in contact with upper or lower sheet, in the twin-sheet thermoforming process of the present invention only the two outer layers are vacuum-formed while the inner layer remains essentially flat and is sandwiched and welded between the two outer layers only along the perimeter where the moulds have pressed the sheets.

### Background of the present invention

Air ducts are frequently produced from sheets of thermoplastic materials. As thermoplastic materials, either rigid, non-foamed materials or foam materials can be used.

Air ducts made from soft materials (foams) already show improved acoustic properties compared to ducts made from rigid materials. Foams used to this end need to be closed cell foams for the air duct to be airtight. However, the closed cell foams usually used for this purpose are still not optimal for sound reduction. A further improvement of sound absorption can be achieved by using sound absorbing materials in the interior of the duct or by adding silencers to the ducts. Both methods are costly since sound absorbing materials have to be laminated to the closed cell materials forming the ducts, or silencer boxes have to be designed, produced and attached to the ducts and in both methods the airflow in the duct is disturbed due to increased back pressure.

It is well known that air ducts or other channels designed for fluid transportation can be lined or in other ways equipped with sound absorbing material to reduce noise levels inside the channel and therefore also noise outside of the channel and in particular at the end of the channel where the fluid exits.

The channel can be lined on all walls (inside or outside of the channel) or only one or anything in between. It can also have at least one intermediate wall of absorbing material acting as a partition wall and dividing the channel into at least two separate channels. It can be covered over the entire length or only a fraction of it.

It is known to use open cell foams like PUR or fibrous materials like fleeces and felts in different thicknesses and area weights as sound absorbing materials. Application of open cell material such as fibrous or open cell PU foam may lead to undesired contamination of the air duct with dirt or dust. Most of the open cell material may absorb humidity and support fungal and bacterial growth.

Such channels are often made using vacuum-forming, blow moulding or injection moulding processes. Often the channels are formed and the acoustic lining is added afterwards using a gluing or welding process; or the materials forming the channel walls are laminated with acoustically absorbing materials prior to the forming process.

Alternatively, the channel half shells are formed and then glued or welded together later, wherein the acoustically absorbing material is integrated during this process step.

It is also known to add reinforcing inserts inside a twin-sheet formed part for structural reinforcement. The structural reinforcement is held in place by a special device ensuring that it does not touch the outer shells of the forming unless the forming is finished. This is done to prevent the reinforcing element from welding to the outer shell material before the forming is finished.

WO 2004/007108 A2 describes a sound-absorbing hollow body used for air supply in motor vehicles comprising two closed-cell polyolefin layers, i.e. a first external layer and a second needled internal layer and at least one additional layer located between the internal and external layer. The additional layer has a surface structure consisting of fibres, particularly nonwoven, which contributes to the sound-absorbing properties to a substantial degree. This three-layer sandwich complex undergoes a blow moulding process, as described in EP 0 445 492 B1, to result in a hollow air supply or air duct. The described production process requires three different raw materials (closed-cell PE, needled PP and fibres) and at least two steps, namely a lamination of the three layer sandwich complex and a subsequent blow moulding. It would be desirable to have a process requiring less types of different raw materials and requiring less process steps.

EP1504933 A1 discloses an air guiding element comprising an additional foamed insulation part enclosing the air guiding element fully or at least partly. This document also describes the process to manufacture the air guiding element: A tubular parison is inserted in an open blow mould, at least one two dimensional foam body is inserted between the parison and the blow mould, the moulds are then closed and the parison is blow moulded to form the air guiding element and is simultaneously welded to the external foamed part.

A disadvantage is that a material has to be externally fixed to the air duct and that the process requires blowing equipment and a means for placing the flat foamed part between the parison and the moulds.

DE 10 2007 060 525 A1 discloses a sound damping air conducting element with at least one opening for air. At least one opening is lined with a sound absorbing material. Injection moulding is proposed as production method with the option to back-inject the acoustic lining in order to produce the part in one shot. This injection moulding process requires a lining of at least parts of the hollow body.

US 2008/0211128 A1 describes a twin-sheet thermoforming process using an apparatus comprising an insert holding assembly to hold an insert between the two sheets during forming. The insert holding assembly prevents the insert from touching the sheets before the moulds close. In the process, the edges of the insert are welded between the two sheets. The process is complex in that a separate mechanical means is required to hold the insert.

US 2003/0003266 A1 (WO 2002/098637 A1) discloses a laminated panel consisting of two layers of thermoplastic resin and a reinforcing insert. This document does not describe the production of hollow bodies by press-forming.

German utility model DE 297 11 763 U1 describes a multilayer hollow body produced by vacuum-forming. For example, a three layer hollow body is disclosed comprising two outer sheets of closed cell polyethylene foam and an interlayer made of open cell polyurethane foam or polyolefin foam extending through the hollow space formed by the two outer sheets. The outer sheets forming the hollow body are thermoformed using a vacuum-forming process. The document does not describe how to produce the three layer body.

WO 2014/182599 discloses a method of making a fluid filled impact absorbing protective structure comprising thermoforming a first and second thermoplastic sheets and placing an intermediate layer of impact absorbing material between the first and second thermoplastic sheets prior to a step of joining the sheets. The method corresponds to the preamble of claim 1.

US 2010/0062198 A1 discloses a method for producing a hollow body comprising a step of superimposing first and second foamed thermoplastic sheets and an intermediate sheet, and thermoforming the first and second thermoplastic sheets.

US 2006/0103172 A1 discloses an overhead system with an integrated structural, acoustic and mounting frame provided for attachment to a roof panel in a vehicle. Hollow structures are formed by joining two sheet materials such as by hot-melt adhesives.

EP 2 631 064 A1 discloses sandwich panel structures covered by skin sheets, wherein a core structure comprising hollow spaces is sandwiched between thermoformed resin sheets.

German utility model DE 20 2007 012 988 U1 describes a multichannel air duct made from closed cell thermoplastic foam sheets which are connected to each other by welding. There is no information about the production process and acoustic absorption.

US 2002/0058082 A1 discloses a process for producing a triple sheet moulded article where three thermoplastic sheets are heated in three separate ovens. The first and second sheets are then formed in separate vacuum forming or press forming processes. The two formed sheets are then welded together to form a twin sheet article. A third sheet is then formed and welded to the already existing twin sheet article to form a triple sheet article.

The process and apparatus for forming the triple sheet article are rather complex as they describe several process steps and various separate units in the apparatus.

EP 0441 199 A2 describes a blow moulding process assisted by vacuum. Two sheets of a high melting polymer are heated to a temperature above their softening temperature and then formed by blowing gas between the sheets and forcing them into the moulds. A third and/or fourth layer of a low melting polymer laminated to one or both high melting polymer sheets are proposed to weld the two formed sheets around the perimeter at a temperature below the forming temperature of the high melting polymer. The process proposes to use more than two sheets in a twin sheet forming process but the additional sheets are pre-laminated to the main sheets as an adhesive layer. This adhesive layer is also formed to adopt the same geometry as the main sheet and therefore does not extend in the hollow space.

A severe disadvantage of the materials used so far is their comparably high water and humidity absorption. Open cell or fibrous materials used as sound absorbing materials are very good sound and water absorbers. The water and humidity absorption properties are, however, a problem in air ducts since the absorbed humidity leads, together with dirt and dust which builds up over time, to bacterial and fungal growth. This causes emissions (smell) and can even lead to problems for the human health.

Also, most of the known sound absorption products are not thermoplastic and therefore need to be attached to the ducts using adhesives.

Most known processes also require more than one process step, or they require modification of existing processes and apparatus.

An object of the present invention in the light of the prior art was to provide a simple production process for a sound absorbing hollow body in which an interlayer extends through the hollow body dividing the hollow space into two sections. It is a particular object of the present invention to provide such a process, wherein the materials of the sheets or layers forming the hollow body are made of the same or similar material and/or or of materials having the same or similar thermoforming temperatures.

Another object of the present invention is to provide sound absorbing hollow bodies which are less susceptible to bacterial and fungal growth.

The present invention solves these problems and relates to the following embodiments:
1. A process for producing a sound absorbing hollow body by twin-sheet thermoforming, comprising the steps:
   a. providing a lower sheet made of a thermoplastic material to be vacuum-formed by a lower mould of a twin-sheet thermoforming device,
   b. providing an upper sheet made of a thermoplastic material to be vacuum-formed by an upper mould of a twin-sheet thermoforming device,
   c. providing at least one intermediate sheet made of a thermoplastic material in contact with the surface of either the lower sheet or the upper sheet,
   d. using the arrangement of sheets obtained in step c., heating the upper and lower sheets to their respective thermoforming temperatures,
   e. vacuum-forming the upper and lower sheets by applying vacuum to the upper and lower moulds, and
   f. moving the upper and lower moulds towards each other to bring the edges of the moulds in contact, whereby the upper and lower sheet are peripherally welded to each other, the intermediate sheet being sandwiched between them, to form a hollow body in which the intermediate sheet extends within the hollow space of the hollow body without contacting the upper and lower sheets.
2. A process according to 1, wherein in step c., d., e. and f., no separate means or insert is used to hold the intermediate sheet apart from the upper or lower sheet.
3. A process according to 1 or 2, wherein the sound absorbing hollow body is an air duct of an automobile or aircraft.
4. A process according to any one of the preceding points, wherein one upper sheet, one lower sheet and one intermediate sheet are used to produce the hollow body.
5. A process according to any one points 1 to 3, wherein one upper sheet, one lower sheet and more than one intermediate sheet are used to produce the hollow body.
6. A process according to any one of the preceding points, wherein the upper sheet, the lower sheet and the intermediate sheet are made of a polyolefin foam material, the upper and lower sheet preferably being made of a closed cell material and the intermediate sheet preferably being made of a perforated closed cell material.
7. A process according to any one of the preceding points, wherein a polyethylene foam sheet or a polypropylene foam sheet is used as the upper sheet and the lower sheet.
8. A process according to any one of the preceding points, wherein the upper sheet and/or the lower sheet used in the process each have a density of 25-150 kg/m³, preferably 60-80 kg/m³.
9. A process according to any one of the preceding points, wherein a polypropylene foam sheet is used as the intermediate sheet.
10. A process according to any one of the preceding points, wherein the intermediate sheet used in the process has a density of 10-500 kg/m³, preferably 40-60 kg/m³.
11. A process according to any one of the preceding points, wherein the upper sheet, the lower sheet and the intermediate sheet are made of polypropylene, or the upper sheet, the lower sheet and the intermediate sheet are made of polyethylene.
12. A process according to any one of the preceding points, wherein the intermediate sheet, the upper sheet and the lower sheet used in the process each have a thickness in the range of from 2 to 15 mm, preferably 3 to 10 mm.
13. A process according to any one of the preceding points, wherein in step c. said upper sheet and said lower sheet are held in an upper part and a lower part of a twin sheet frame and said intermediate sheet is placed on the lower sheet.
14. A process according to 13, wherein the lateral dimensions of the intermediate sheet do not coincide with the lateral dimensions of the lower and the upper sheet.
15. A process according to anyone of points 1 to 12, wherein in step c. said upper sheet and said lower sheet are held in an upper part and a lower part of a twin sheet frame and said intermediate sheet is held in the upper part of the twin sheet frame.

### Detailed description

A thermoforming process is a process in which a heated and softened sheet of thermoplastic material is moulded by applying vacuum suction through a perforated mould. The suction makes the sheet adhere to the mold surface. The sheet is then cooled down. Twin-sheet thermoforming generally refers to the moulding of a first sheet in an upper mould and a second sheet in a lower mould, followed by an operation of compression of the two formed sheets against each other while still hot and relatively soft, thereby providing a fused interface at the periphery to produce a hollow type product. The present invention uses this known process to produce sound-absorbing hollow bodies in which at least one intermediate sheet divides the hollow space formed by moulding the upper sheet and the lower sheet. The present invention particularly resides in the finding that for obtaining such hollow bodies, the at least one intermediate sheet does not require specific holding means or process modification but can simply be integrated in the normal twin-sheet thermoforming process described above. This is surprisingly even the case when the materials of the different sheets are all the same or essentially the same in terms of material and/or thermoforming temperature. The present invention, as a preferred embodiment, therefore encompasses embodiments in which the material of the different sheets is the same.

Thus, in the process of the present invention, a third (intermediate) layer stays unformed in the middle of the hollow article providing acoustic absorption. This intermediate layer is welded to the outer shells only along the perimeter. The intermediate sheet in the present invention is not a lining of the outer sheets. Also, the intermediate layer is not pre-laminated to one of the outer sheets.
The ducts are therefore produced in a one shot twin sheet vacuum-forming process with three layers of the thermoplastic material, preferably foam material. "One shot" here means that no additional process steps or mechanical means are required in the process of the present invention as compared to the standard twin sheet thermoforming process except for the provision of the intermediate sheet.

In the process of the present invention, a lower sheet, preferably a closed cell polyolefin foam, to be vacuum-formed by a lower mould of a twin-sheet thermoforming device is provided. As in the known twin-sheet thermoforming process the lower sheet is held by a frame, specifically the lower part of a twin-sheet frame. Likewise, an upper sheet, preferably a closed cell polyolefin foam, to be vacuum-formed by an upper mould of a twin-sheet thermoforming device is provided, and said upper sheet is held by the upper part of the twin-sheet frame.

In the present invention, at least one intermediate sheet is additionally provided and is allowed to be in contact with the surface of either the lower sheet or the upper sheet. That is, as noted above, the intermediate sheet can simply be integrated in the known twin-sheet thermoforming process without requiring a separate means or insert to hold the intermediate sheet apart from the upper and/or lower sheet.

In the process of the present invention, the upper sheet and the lower sheet provided can be cut to predetermined dimensions to be held by the twin-sheet frame.
The intermediate sheet can either also be cut to have the same dimensions as the upper and/or lower sheet. In this case the intermediate sheet can be held by the upper or lower part of the twin sheet frame together and in contact with either the upper or lower sheet.
Alternatively, the intermediate sheet can have smaller dimensions than the upper and lower sheet. In this case, it is possible and advantageous to simply place the intermediate sheet on the lower sheet held by the lower part of the twin-sheet frame. This embodiment is a particularly simple embodiment of the process of the present invention.

At this stage of the process of the present invention, the obtained arrangement of sheets is such that the upper sheet held by the upper part of the frame and the lower sheet held by the lower part of the frame, one of them being in contact with the intermediate sheet, are spaced apart from each other.

Using the obtained arrangement of the sheets, heating is started and performed in order to heat the upper and lower sheet to their respective thermoforming temperatures. The heating is generally externally conducted by moving heating elements to the vicinity of the upper and lower sheets. The heating can preferably be the same heating as would be the case when only the upper and lower sheets were subjected to the vacuum thermoforming process.

When the upper and lower sheets have reached their respective thermoforming temperatures, the heating elements are removed and the upper and lower moulds start approaching the sheets from the top and from the bottom and contact them. As soon as the moulds contact the foam sheets, vacuum is applied to the moulds and the foam sheets are sucked into the mould and adopt the geometry of the mould, i.e. the upper and lower sheets are vacuum-formed. In the present invention, the vacuum-forming is generally not assisted by blowing of air to press the sheets against the moulds, i.e. the process of the present invention does not comprise blow-moulding.

The upper and lower moulds are then moved towards each other and eventually closed while the sheets are still soft to bring the edges of the moulds in contact, whereby the upper sheet and the lower sheet are peripherally welded to each other, the intermediate sheet being sandwiched between them where the moulds contacted.
In the present invention, the intermediate sheet is not formed and remains flat. It is surprising that it is not welded during the heating and forming process to the upper or lower sheet with which it is in contact. It would have been expected that due to the contact to one of the heated outer sheets, particularly in case of using the same or similar material, at least a partial fusion and attachment would occur. An explanation might be that the temperature of the intermediate sheet after heating is still well below the melting and even softening temperature of the polymer and/or that air flows between the two outer sheets during the forming process although the exact reason is not known. Nevertheless, the thermal energy inside the materials is sufficient for the peripheral welding when the moulds close and compress the three layers along the perimeter.

Then, the obtained hollow body is cooled down to room temperature so that it maintains its shape. In the obtained sound absorbing hollow body, the intermediate sheet extends within the hollow space of the formed hollow body and does not contact the upper and the lower sheets in the formed part of the hollow body.

In the process of the present invention, it is required that the sheets used in the process are made of thermoplastic material so as to be thermo-formable. The thermoplastic material is not specifically restricted. However, a polyolefin is preferably used as the thermoplastic material, more preferably a polyethylene and/or polypropylene. Other materials such as EVA (ethylene vinyl acetate copolymer) can also be contained in copolymerized or admixed form.

It is particularly preferred to use foam materials as the sheets. Thereby, a lower weight and improved acoustic absorption can be achieved as compared with rigid, non-foamed materials. It is particularly preferred to use polyolefin foam sheets.
The polyolefin foams used in the production process of the present invention and methods of obtaining them are generally known. Preferably, the foam sheets are selected from polyethylene foams and polypropylene foams, mixtures and copolymers of these. As a copolymerized or admixed material, EVA can suitably be used.

More preferably, closed cell foams are used for the upper and lower sheet. The upper and lower sheet are normally and preferably not perforated in the present invention.

In the present invention, the intermediate polyolefin foam sheet is also made of a closed cell polyolefin foam which is, however, perforated or micro-perforated. Since the intermediate sheet is made of closed cell material, problems encountered with open cell foams and fleece material like bacterial and fungal growth are reduced or eliminated. To allow regulation of humidity and gas exchange and the desired acoustic properties, the intermediate sheet is micro-perforated. Such sheets can be prepared by needling.

The upper sheet, lower sheet and intermediate sheet can be independently selected from crosslinked and non-crosslinked closed cell polyolefin foams.

In preferred embodiments of the present invention, the outer sheets and the intermediate sheet are made of the same material, i.e. they are all polyethylene or all polypropylene, more preferably the same type of polyethylene or polypropylene. However, the present invention also comprises embodiments in which the material of the foam sheets differs. For example, the outer sheets could be made using the same material and the intermediate sheet could be of a different material. In a preferred embodiment, the intermediate sheet has a lower melting point or softening point than the outer sheets in order to facilitate thermal bonding at the portions to be welded.

The air duct is preferably produced from closed cell polyolefin foams. The thickness of each of the sheets can be varied according to demand but is typically in a range of 2 to 20 mm, preferably 2 to 15 mm, more preferably 3 to 10 mm, also preferably 4 to 6 mm.

The thickness of the outer sheets and the intermediate sheet can be the same or different. The sheets forming the outer shells preferably have a thickness of 2 to 15 or mm 2 to 10 mm, more preferably 3 to 6 mm. The sheets forming the outer shells of the hollow body preferably have a density between 25 to 150 kg/m³, preferably 30 to 90 kg/m³, more preferably 60 to 80 kg/m³. Preferred are outer sheets having a thickness of 3 to 6 mm and a density of 30 to 90 kg/m³, more preferably 60 to 80 kg/m³.

The cells of the closed cell foam of the upper and lower sheet typically show average diameters in the range of from 0.1 to 5mm, for example foams with an average sell size of 0.2 to 0.4 mm or 0.5 to 0.8 mm could be used. In the present invention, the average cell diameter is determined according to ISO 7214.

The inner, sound absorbing layer (intermediate sheet) is preferably made of a sound absorbing micro-perforated closed cell polyolefin foam having a density of 10 to 500 kg/m³, preferably 40 to 100kg/m³, more preferably 40 to 60 kg/m³. The thickness is generally from 3 to 20mm, preferably 2 to 15 mm, more preferably 3 to 10 mm, also preferably 4 to 6 mm. The cells of the acoustically absorbing foam of the intermediate sheet typically show average diameters in the range of from 0.1 to 5mm, for example foams with an average cell size of 0.2 to 0.4 mm or 0.5 to 0.8 mm could be used.

The intermediate sheet is preferably perforated such as by needling. The diameter of the perforation holes are typically in the range of from 0.1 to 5.0 mm in the present invention, more preferably about 0.1 to 1.0 mm or 0.2 to 0.8 mm, most preferably about 0.5 mm. The degree of perforation can be expressed via the area of perforated holes in relation to the area of the sheet. This open surface area is generally in the range of from 1 to 50 %, more preferably 2 to 20 %, more preferably 5 to 15 %, most preferably about 10 %. The above described perforation is also termed micro-perforation in the present invention.
A typical perforation density is about 30 holes/cm² in case of a hole diameter in the foam of about 0.5 mm.

In the present invention, the foams preferably used are closed cell foams. The degree of closed cells can be determined via the water absorption of the foams by immersing foam samples of 100 mm x 100 mm for 7 days in water to a depth of at least 3 cm and, after wiping the samples dry from the outside, measuring the weight. The weight difference before and after immersion is expressed in % by volume. Preferably the foams used in the present invention preferably show water absorptions of 1 % by volume or less.

In the process of the present invention, generally only one upper and lower sheet are used. In the present invention, the upper and lower sheet are single layers. This means that the upper and lower sheet are generally not lined or laminated with other material layers in the present invention.

In embodiments of the present invention, the intermediate sheet is also only one sheet. However, the present invention also comprises embodiments in which more than one intermediate sheet is used. Thereby, an increased sound absorption can be obtained, or the sound absorption can be tailored to the desired application. For example, two or three intermediate sheets could preferably be used in embodiments of the present invention. If more than one intermediate sheet is used, the process of the present invention is carried out by placing more than one intermediate sheet between the upper and lower sheet. For example, if two intermediate sheets are used, one intermediate sheet can be placed in contact with the lower sheet and another intermediate sheet can be placed in contact with the upper sheet. Alternatively, one intermediate sheet can be placed in contact with the lower sheet and the second intermediate sheet is placed on the first intermediate sheet.
When three intermediate sheets are used, typically one of the sheets is placed in contact with the surface of the lower sheet, for example by fixing both in the lower part of the twin sheet frame, another intermediate sheet is placed thereon, and the third intermediate sheet is placed in contact with the upper sheet by fixing in the upper part of the twin sheet frame.

Alternatively, when more than one intermediate sheet is used, the intermediate sheets can first be attached to each other to form a multilayer sheet by lamination or welding and the obtained multilayer sheet is then used in the process of the present invention.

The sound-absorbing hollow body obtained by the process of the present invention, such as an air duct, can be equipped along it's total length with the acoustically absorbing material or only partially. Depending on the length covered and the absorption properties of the absorbing materials as well as on the noise signature of the noise source, noise reductions in the range of up to 20dB/m of duct are achievable as compared to noise levels of a same geometry duct without the interlayer of acoustically absorbing material.

Such ducts are typically used in vehicles such as cars, buses, trains, trucks or airplanes for the distribution of air throughout the vehicle. The air is provided by one or more air-conditioning units in the right amount and temperature and is distributed in the vehicle through ducts. The weight of the ducts should be as low as possible, the noise of the air-conditioning unit should not be transferred through the duct or it should be at least reduced, the duct should have low lambda values (thermal conductivity) for quick thermal response and low or no condensation. All of this can be achieved with the duct produced according to the present invention.

### Summary of advantages of the process of the present invention

The process of the present invention provides a twin-sheet vacuum-formed duct with an interlayer of micro-perforated, closed cell polyolefin foam for acoustic absorption. The duct is formed by a very simple process in one shot including the acoustically absorbing material.

The sound absorbing material is simply inserted into the process as a third layer. No design-engineering changes have to be made to the existing system (machine, frame, tooling). Surprisingly, the material doesn't weld to the outer layers during the heating process and remains unformed during the forming process. This results in a duct with two formed outer layers and one unformed interlayer. The interlayer is welded to the outer shells only when the moulds close due to the applied pressure around the circumference and the heat still present in the material forming the outer shells of the duct.

This one shot process provides a considerable advantage compared to the prior art.

The airflow in air ducts obtained by the process of the present invention is essentially not disturbed since the intermediate sheet is parallel to the airflow in the center of the duct. Only the material cost of the sound absorbing material makes a difference with respect to a corresponding process using no intermediate sheet.

Also the micro-perforated polyolefinic intermediate sheet has the advantage of absorbing less water and humidity due to its closed cell structure and the hydrophobic nature of polyolefins. Even if the material absorbs some humidity it dries quicker due its hydrophobic nature. This causes less problems with bacterial and fungal growth.

### Examples

Experiments were carried out using two different polyethylene foam sheets (70 and 77 kg/m³ density, 4mm thickness) and a polypropylene foam (40kg/m³, 5 mm) as outer shells. The intermediate sheet was formed by a micro-perforated polypropylene foam (50 kg/m³ density, 5mm thickness). For comparison, all ducts were produced with and without the intermediate sheet.

### Example 1: 70kg/m³, 4mm polyethylene foam with interlayer of 50kg/m³, 5 mm micro-perforated polypropylene foam

Two layers of closed cell (water absorption < 1vol%) physically crosslinked polyethylene foam with a softening point between 85 and 127°C (density 70kg/m³, thickness 4mm, average cell size 0.5 to 1 mm) were used as material forming the outer shell of the duct.

One layer of closed cell micro-perforated (30 holes per cm², 0.6 mm hole diameter) directly extruded polypropylene foam with a melting point around 150°C (density 50kg/m³, thickness 5mm, average cell size 1-2mm) was used as the acoustically absorbing interlayer.

The two sheets of the PE foam were fixed in the twin sheet frame (top and bottom sheet) with a gap between them so as to avoid contact with each other during the heating and forming process. The sound absorbing interlayer was placed between the two outer sheets by laying it on the lower sheet without any additional fixation such as gluing, welding or clamping.

The process was then started by heating the outer sheets from the outside (upper sheet from top, lower sheet from bottom) with a target outer surface temperature of about 160°C to 170°C. The heating process typically takes around 60s. The forming process then starts with the moulds closing towards the two sheets. Vacuum is applied to the moulds once the lower mould touches the outside of the lower sheet and the upper mould touches the outside of the upper sheet and the softened sheets are sucked into the respective moulds. The sheet forming the interlayer is less heated and not softened and stays essentially flat during the forming process. The moulds keep moving towards each other and eventually close and therefore clamp the interlayer between the two outer layers. The heat energy stored in the outer layers together with the pressure applied through the moulds is sufficient to weld the three layers together along the perimeter. The part is then cooled and the moulds eventually open and the finished part can be removed from the equipment.

### Example 2: 75 kg/m³, 4mm PE foam with interlayer of 50kg/m³, 5mm micro-perforated PP foam

Two layers of closed cell (water absorption <1 vol%) physically crosslinked polyethylene foam with a softening point between 110°C and 120°C (density 75kg/m³, thickness 4 mm, average cell size 0.3 to 0.5mm) were used as material forming the outer shell of the duct.

One layer of closed cell micro-perforated (30 holes per cm², 0.6 mm hole diameter) directly extruded polypropylene foam with a melting point around 150°C (density 50kg/m³, thickness 5mm, average cell size 1-2mm) was used as the acoustically absorbing interlayer.

The forming process is the same as described in Example 1.

### Example 3: 40 kg/m³, 5 mm polypropylene foam with interlayer 50kg/m³ 5mm micro-perforated PP foam

Two layers of closed cell (water absorption <1 vol%) physically crosslinked polypropylene foam with a softening point between 120°C and 150°C (density 40kg/m³, thickness 5 mm, average cell size 0.1 to 0.3mm) were used as material forming the outer shell of the duct.

One layer of closed cell micro-perforated (30 holes per cm², 0.6mm hole diameter) directly extruded polypropylene foam with a melting point around 150°C (density 50kg/m³, thickness 5mm, average cell size 1-2mm) was used as the acoustically absorbing interlayer.

The forming process is the same as described in Example 1 with the target surface temperature during heating being around 170-180°C

For the production of the air ducts, a standard twin-sheet vacuum-forming apparatus from Geiss, model T7 with twin sheet option was used.

In each of the inventive examples, the intermediate sheet was simply placed on the lower sheet in the twin-sheet vacuum-forming apparatus without fixing it in the lower part of the twin-sheet frame.

For all combinations of foams, it was possible to produce air ducts. In the inventive examples, the intermediate sheet extended along the center of the formed air duct, remained unformed and did not attach to the formed outer sheets, except at the welding site.

As Comparative Examples 1 to 3, corresponding air ducts were produced using the same shell materials and production process except that no intermediate layer was used.

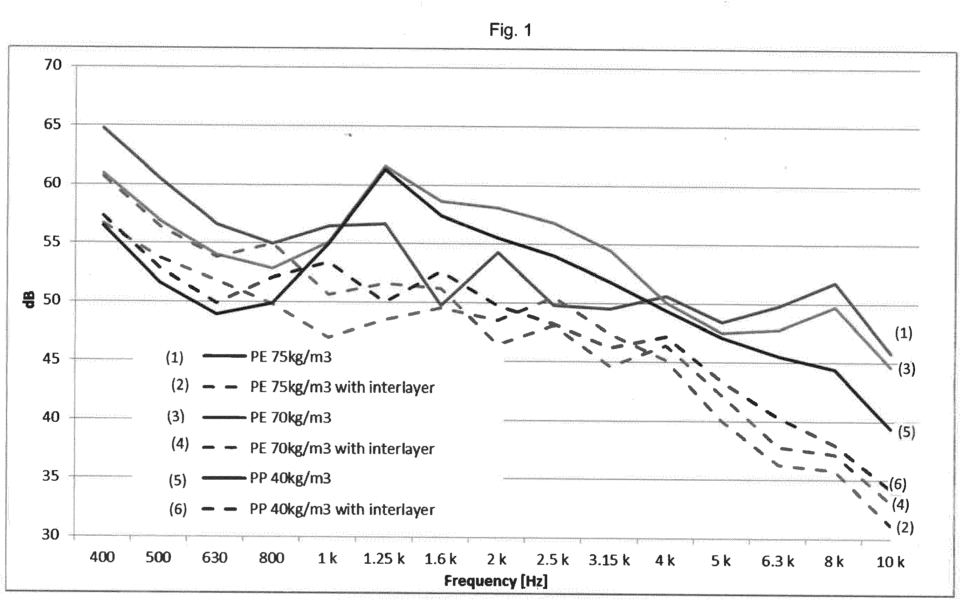

Acoustic measurements were performed with all six above described ducts. Already the ducts without interlayer show differences in results. The ducts with interlayers are better over the whole frequency range from 400 to 10000 Hz with improvements ranging up to 14dB, as shown in Fig. 1.

The measurements have all been carried out with the same duct geometry (duct length ca. 60cm), duct cross-section ca. 20 cm². Air and noise source was a blower from VW Golf I which was mounted in a sound insulated box. The noise was measured with a microphone at the exit of the duct.

The combinations of foams and results of the tests are summarized in the following table and graph:

| Example | Outer Layers | Sound absorbing interlayer | Forming | Welding |
|---|---|---|---|---|
| Example 1 | PE foam 70kg/m³ 4mm | PP foam 50kg/m³ 5mm microperf. | Good | Good |
| Example 2 | PE foam 75kg/m³ 4mm | PP foam 50kg/m³ 5mm microperf. | Good | Good |
| Example 3 | PP foam 40kg/m³ 5mm | PP foam 50kg/m³ 5mm microperf. | Good | Good |
| Comparative Example 1 | PE foam 70kg/m³ 4mm | - | Good | Good |
| Comparative Example 1 | PE foam 75kg/m³ 4mm | - | Good | Good |
| Comparative Example 1 | PP foam 40kg/m³ 5mm | - | Good | Good |

The examples show that effective sound absorbing air ducts can be produced using a very simple twin sheet process. The obtained air ducts have improved sound absorption as compared to corresponding air ducts without intermediate sheet.

## Claims

1. A process for producing a sound absorbing hollow body by twin-sheet thermoforming, comprising the steps:
a. providing a lower sheet made of a thermoplastic material to be vacuum-formed by a lower mould of a twin-sheet thermoforming device,
b. providing an upper sheet made of a thermoplastic material to be vacuum-formed by an upper mould of a twin-sheet thermoforming device,
c. providing at least one intermediate sheet made of a thermoplastic material,
d. heating the upper and lower sheets to their respective thermoforming temperatures,
e. vacuum-forming the upper and lower sheets by applying vacuum to the upper and lower moulds, and
f. moving the upper and lower moulds towards each other to bring the edges of the moulds in contact, whereby the upper and lower sheet are peripherally welded to each other, the intermediate sheet being sandwiched between them, to form a hollow body in which the intermediate sheet extends within the hollow space of the hollow body without contacting the upper and lower sheets,
the process being **characterized in** the steps c and d comprising:
c. providing at least one intermediate sheet made of a thermoplastic material in contact with the surface of either the lower sheet or the upper sheet,
d. using the arrangement of sheets obtained in step c., heating the upper and lower sheets to their respective thermoforming temperatures.

2. A process according to claim 1, wherein in step c., d., e. and f., no separate means or insert is used to hold the intermediate sheet apart from the upper or lower sheet.

3. A process according to claim 1 or 2, wherein the sound absorbing hollow body is an air duct of an automobile or aircraft.

4. A process according to any one of the preceding claims, wherein one upper sheet, one lower sheet and one intermediate sheet are used to produce the hollow body.

5. A process according to any one claims 1 to 3, wherein one upper sheet, one lower sheet and more than one intermediate sheet are used to produce the hollow body.

6. A process according to any one of the preceding claims, wherein the upper sheet, the lower sheet and the intermediate sheet are made of a polyolefin foam material, the upper and lower sheet preferably being made of a closed cell material and the intermediate sheet preferably being made of a perforated closed cell material.

7. A process according to any one of the preceding claims, wherein a polyethylene foam sheet or a polypropylene foam sheet is used as the upper sheet and the lower sheet.

8. A process according to any one of the preceding claims, wherein the upper sheet and/or the lower sheet used in the process each have a density of 25-150 kg/m³, preferably 60-80 kg/m³.

9. A process according to any one of the preceding claims, wherein a polypropylene foam sheet is used as the intermediate sheet.

10. A process according to any one of the preceding claims, wherein the intermediate sheet used in the process has a density of 10-500 kg/m³, preferably 40-60 kg/m³.

11. A process according to any one of the preceding claims, wherein the upper sheet, the lower sheet and the intermediate sheet are made of polypropylene, or the upper sheet, the lower sheet and the intermediate sheet are made of polyethylene.

12. A process according to any one of the preceding claims, wherein the intermediate sheet, the upper sheet and the lower sheet used in the process each have a thickness in the range of from 2 to 15 mm, preferably 3 to 10 mm.

13. A process according to any one of the preceding claims, wherein in step c. said upper sheet and said lower sheet are held in an upper part and a lower part of a twin sheet frame and said intermediate sheet is placed on the lower sheet.

14. A process according to claim 13, wherein the lateral dimensions of the intermediate sheet do not coincide with the lateral dimensions of the lower and the upper sheet.

15. A process according to any one of claims 1 to 12, wherein in step c. said upper sheet and said lower sheet are held in an upper part and a lower part of a twin sheet frame and said intermediate sheet is held in the upper part of the twin sheet frame.

## Patentansprüche

1. Verfahren zur Herstellung eines schallabsorbierenden Hohlkörpers durch Twin-Sheet-Warmformen, mit den Schritten:
a. Vorsehen einer unteren Platte (Sheet) aus einem thermoplastischen Material, die durch eine untere Form einer Twin-Sheet-Warmformvorrichtung vakuumgeformt werden soll,
b. Vorsehen einer oberen Platte (Sheet) aus einem thermoplastischen Material, die durch eine obere Form einer Twin-Sheet-Warmformvorrichtung vakuumgeformt werden soll,
c. Vorsehen mindestens einer Zwischen-Platte (-Sheet) aus einem thermoplastischen Material,
d. Erwärmen der oberen und unteren Platten auf deren jeweilige Warmformtemperaturen,
e. Vakuumformen der oberen und unteren Platte durch Anlegen eines Vakuums an die obere und die untere Form, und
f. Bewegen der oberen und der unteren Form auf einander zu, um die Ränder der Formen in Kontakt zu bringen, wobei die obere und die untere Platte umlaufend miteinander verschweißt werden, wobei sich die Zwischen-Platte zwischen diesen befindet, um einen hohlen Körper zu bilden, in welchem die Zwischen-Platte innerhalb des Hohlraums des hohlen Körpers ohne Berühren der oberen und unteren Platten verläuft,
wobei das Verfahren durch die folgenden Schritte c und d gekennzeichnet ist, umfassend:
c. Vorsehen mindestens einer Zwischen-Platte aus einem thermoplastischen Material in Kontakt mit der Oberfläche entweder der unteren Platte oder der oberen Platte,
d. unter Verwendung der in Schritt c. erhaltenen Platten-Anordnung, Erwärmen der oberen und unteren Platten auf deren jeweilige Warmformtemperaturen.

2. Verfahren nach Anspruch 1, wobei in Schritt c., d., e. und f. keine separaten Mittel oder Einsätze verwendet werden, um die Zwischen-Platte von der oberen oder unteren Platte auseinander zu halten.

3. Verfahren nach Anspruch 1 oder 2, wobei der schallabsorbierende Hohlkörper ein Luftkanal eines Automobils oder Flugzeugs ist.

4. Verfahren nach einem der vorhergehenden Ansprüche, wobei eine obere Platte, eine untere Platte und eine Zwischen-Platte zur Herstellung des Hohlkörpers verwendet werden.

5. Verfahren nach einem der Ansprüche 1 bis 3, wobei eine obere Platte, eine untere Platte und mehr als eine Zwischen-Platte zur Herstellung des Hohlkörpers verwendet werden.

6. Verfahren nach einem der vorhergehenden Ansprüche, wobei die obere Platte, die untere Platte und die Zwischen-Platte aus einem Polyolefinschaummaterial gebildet sind, wobei die obere und untere Platte bevorzugt aus einem Material mit geschlossenen Zellen und die Zwischen-Platte bevorzugt aus einem perforierten geschlossenzelligen Material gebildet ist.

7. Verfahren nach einem der vorhergehenden Ansprüche, wobei eine Polyethylen-Schaumstoff-Platte oder eine Polypropylen-Schaumstoff-Platte als die obere und die untere Platte verwendet wird.

8. Verfahren nach einem der vorhergehenden Ansprüche, wobei die obere Platte und/oder die untere Platte, die in dem Verfahren verwendet wird/werden, jeweils eine Dichte von 25-150 kg/m³, bevorzugt 60-80 kg/m³ aufweist/aufweisen.

9. Verfahren nach einem der vorhergehenden Ansprüche, wobei eine Polypropylenschaum-Platte als Zwischen-Platte verwendet wird.

10. Verfahren nach einem der vorhergehenden Ansprüche, wobei die in dem Verfahren verwendete Zwischen-Platte eine Dichte von 10-500 kg/m³, bevorzugt 40-60 kg/m³, aufweist.

11. Verfahren nach einem der vorhergehenden Ansprüche, wobei die obere Platte, die untere Platte und die Zwischen-Platte aus Polypropylen gebildet sind, oder die obere Platte, die untere Platte und die Zwischen-Platte aus Polyethylen gebildet sind.

12. Verfahren nach einem der vorhergehenden Ansprüche, wobei die Zwischen-Platte, die obere Platte und die untere Platte, die in dem Verfahren verwendet werden, jeweils eine Dicke im Bereich von 2 bis 15 mm, bevorzugt 3 bis 10 mm, aufweisen.

13. Verfahren nach einem der vorhergehenden Ansprüche, wobei in Schritt c. die obere Platte und die untere Platte in einem oberen Teil und einem unteren Teil eines Twin-Sheet-Rahmens gehalten werden und die Zwischen-Platte auf der unteren Platte angeordnet wird.

14. Verfahren nach Anspruch 13, wobei die lateralen Ausmaße der Zwischen-Platte nicht mit den lateralen Ausmaßen der unteren und der oberen Platte übereinstimmen.

15. Verfahren nach einem der Ansprüche 1 bis 12, wobei in Schritt c. die obere Platte und die untere Platte in einem oberen Teil und einem unteren Teil eines Twin-Sheet-Rahmens gehalten werden und die Zwischen-Platte in dem oberen Teil des Twin-Sheet-Rahmens gehalten wird.

## Revendications

1. Procédé de production d'un corps creux absorbeur de sons par thermoformage de feuilles jumelles, comprenant les étapes suivantes:
a. prévoir une feuille inférieure constituée d'un matériau thermoplastique à former sous vide par un moule inférieur d'un dispositif de thermoformage de feuilles jumelles,
b. prévoir une feuille supérieure constituée d'un matériau thermoplastique à former sous vide par un moule supérieur d'un dispositif de thermoformage de feuilles jumelles,
c. prévoir au moins une feuille intermédiaire constituée d'un matériau thermoplastique,
d. chauffer les feuilles supérieure et inférieure à leurs températures de thermoformage respectives,
e. former sous vide les feuilles supérieure et inférieure en appliquant un vide aux moules supérieur et inférieur, et
f. déplacer les moules supérieur et inférieur en direction l'un de l'autre de manière à amener les bords des moules en contact, moyennant quoi les feuilles supérieure et inférieure sont soudées de façon périphérique l'une à l'autre, la feuille intermédiaire étant coincée entre celles-ci, de manière à former un corps creux dans lequel la feuille intermédiaire s'étend à l'intérieur de l'espace creux du corps creux sans entrer en contact avec la feuille supérieure et la feuille inférieure,
le procédé étant **caractérisé en ce que** les étapes c. et d. comprennent:
c. prévoir au moins une feuille intermédiaire constituée d'un matériau thermoplastique en contact avec la surface de l'une ou l'autre de la feuille inférieure ou de la feuille supérieure,
d. en utilisant l'agencement de feuilles obtenu à l'étape c., chauffer les feuilles supérieure et inférieure à leurs températures de thermoformage respectives.

2. Procédé selon la revendication 1, dans lequel aux étapes c., d., e. et f., aucun moyen de séparation ou insert n'est utilisé pour maintenir la feuille intermédiaire à l'écart de la feuille supérieure ou inférieure.

3. Procédé selon la revendication 1 ou 2, dans lequel le corps creux absorbeur de sons est un conduit d'air d'une automobile ou d'un avion.

4. Procédé selon l'une quelconque des revendications précédentes, dans lequel une feuille supérieure, une feuille inférieure et une feuille intermédiaire sont utilisées pour produire le corps creux.

5. Procédé selon l'une quelconque des revendications 1 à 3, dans lequel une feuille supérieure, une feuille inférieure et plus d'une feuille intermédiaire sont utilisées pour produire le corps creux.

6. Procédé selon l'une quelconque des revendications précédentes, dans lequel la feuille supérieure, la feuille inférieure et la feuille intermédiaire sont constituées d'un matériau de mousse de polyoléfine, les feuilles supérieure et inférieure étant de préférence constituées d'un matériau à cellules fermées et la feuille intermédiaire étant de préférence constituée d'un matériau à cellules fermées perforé.

7. Procédé selon l'une quelconque des revendications précédentes, dans lequel une feuille de mousse de polyéthylène ou une feuille de mousse de polypropylène est utilisée pour la feuille supérieure et la feuille inférieure.

8. Procédé selon l'une quelconque des revendications précédentes, dans lequel la feuille supérieure et/ou la feuille inférieure utilisée(s) dans le procédé présente(nt) chacune une densité comprise entre 25 kg/m³ et 150 kg/m³, de préférence entre 60 kg/m³ et 80 kg/m³.

9. Procédé selon l'une quelconque des revendications précédentes, dans lequel une feuille de mousse de polypropylène est utilisée pour la feuille intermédiaire.

10. Procédé selon l'une quelconque des revendications précédentes, dans lequel la feuille intermédiaire utilisée dans le procédé présente une densité comprise entre 10 kg/m³ et 500 kg/m³, de préférence entre 40 kg/m³ et 60 kg/m³.

11. Procédé selon l'une quelconque des revendications précédentes, dans lequel la feuille supérieure, la feuille inférieure et la feuille intermédiaire sont constituées de polypropylène, ou la feuille supérieure, la feuille inférieure et la feuille intermédiaire sont constituées de polyéthylène.

12. Procédé selon l'une quelconque des revendications précédentes, dans lequel la feuille intermédiaire, la feuille supérieure et la feuille inférieure utilisées dans le procédé présentent chacune une épaisseur qui est comprise dans la gamme de 2 mm à 15 mm, de préférence de 3 mm à 10 mm.

13. Procédé selon l'une quelconque des revendications précédentes, dans lequel, à l'étape c., ladite feuille supérieure et ladite feuille inférieure sont maintenues dans une partie supérieure et une partie inférieure d'un cadre à feuilles jumelles, et ladite feuille intermédiaire est placée sur la feuille inférieure.

14. Procédé selon la revendication 13, dans lequel les dimensions latérales de la feuille intermédiaire ne coïncident pas avec les dimensions latérales de la feuille inférieure et de la feuille supérieure.

15. Procédé selon l'une quelconque des revendications 1 à 12, dans lequel, à l'étape c., ladite feuille supérieure et ladite feuille inférieure sont maintenues dans une partie supérieure et une partie inférieure d'un cadre à feuilles jumelles, et ladite feuille intermédiaire est maintenue dans la partie supérieure du cadre à feuilles jumelles.
